# EUROPEAN PATENT SPECIFICATION

(11) **EP 4 116 246 B1**
(45) Date of publication and mention of the grant of the patent: **29.01.2025**
(21) Application number: 22174085.5
(22) Date of filing: 18.05.2022
(51) Int. Cl.: B65H 54/70

(54) **WINDING MACHINE WITH AN IMPROVED SUCTION AND WASTE COLLECTION SYSTEM AND A CONTROL METHOD THEREOF**
WICKELMASCHINE MIT VERBESSERTER ABSAUG- UND ABFALLSAMMLUNGSVORRICHTUNG UND STEUERUNGSVERFAHREN DAFÜR
MACHINE D'ENROULEMENT DOTÉE D'UN SYSTÈME DE COLLECTE DE DÉCHETS ET D'ASPIRATION AMÉLIORÉ ET SON PROCÉDÉ DE COMMANDE

(30) Priority: 09.07.2021 IT 202100018119
(43) Date of publication of application: 11.01.2023
(73) Proprietor: Savio Macchine Tessili S.p.A., 33170 Pordenone (IT)
(72) Inventor: MORINI, Giuseppe, 33170 Pordenone (IT); SIMONATTO, Michele, 33170 Pordenone (IT); PAVAN, Henry, 33170 Pordenone (IT)
(74) Representative: Mitola, Marco

(56) References cited:
- EP-A1- 2 481 700
- EP-A1- 3 167 950
- DE-A1- 102008 040 992
- DE-A1- 2 644 274

## Description

### FIELD OF APPLICATION

The present invention relates to a winding machine with an improved suction and waste collection system and a control method thereof.

### STATE OF THE ART

As is well known, automatic winding machines produce considerable quantities of strands, dust and waste, which must be suitably aspirated and evacuated. For this purpose, special suction devices are used (typically centrifugal fans) which remove the waste from the utilities involved and convey it to special collection boxes before subsequent removal, either manually or centrally, in order to avoid undesirable clogging/yarn accumulation and thus guarantee the correct operation of the machine.

The present invention relates to a winding machine provided with an improved suction and waste collection system and a control method thereof. By way of a non-limiting example, the invention refers to a yarn suction and collection system serving a bobbin preparer, i.e. a preliminary station for processing bobbins of yarn coming directly from the spinning machine or from an independent loading system (bulk).

The main purpose of the preparer is to prepare the bobbins for the following winding phase and it is equipped with a dedicated aeraulic system which is designed to intercept the yarn end of each bobbin by means of a nozzle and insert it inside the tube in order to facilitate the gripping of the yarn end by the winding unit during the unravelling phase. The bobbins are transferred on special plates by means of conveyor belts to the yarn end suction nozzle, which is connected by pipes to the aforementioned dedicated suction unit that generates the required vacuum.

For obvious reasons due to the need to aspirate and collect the waste resulting from the pick-up of the yarn end on the spool side and from the corresponding cut made by the scissors on the nozzle, the use of a strand collection box equipped with a filter to separate the strands from the air flow and prevent such strands from reaching the fan intake mouth is a known method. Typically, the box is emptied in a timed manner depending on the number of bobbins and the type of yarn. Moreover, the emptying of the box is entrusted either to an operator, who manually removes the strands by opening the door of the filter box (and therefore stopping the vacuum device for obvious reasons of safety and accessibility) or to a centralized vacuum system which, by means of special aeraulic ducts, conveys the strands with pneumatic transport up to the filter housed in the head of the machine. In the case where there is only one yarn collection box serving the system the disadvantage is the inevitable drop in productivity of the yarn end search station related to the need to temporarily interrupt the aspiration of such yarn end.

In the case of manual emptying, this temporary interruption of the suction is necessary to cancel the depression present in the box and allow the operator to open the door and remove the strands in safety.

In the case of automatic emptying, this interruption serves to make the box hermetic and thus allow the exclusive connection to the depression generated by the centralized vacuum device, thus making the evacuation of the strands possible.

In addition, each filter is typically placed at the service of other utilities, which may be fixed (e.g. plate conveyor belt cleaning nozzles) or variable (e.g. bobbin cleaner) and which must be served independently of the operating conditions of the yarn end search nozzle. Solutions according to prior art are disclosed for example by DE 2644274 A1.

### PRESENTATION OF THE INVENTION

The need is therefore felt to resolve the drawbacks and limitations mentioned with reference to the prior art.

Such need is met by a winding machine according to claim 1 and by a winding machine control method according to claim 11.

### DESCRIPTION OF THE DRAWINGS

Further characteristics and advantages of the present invention will be more clearly comprehensible from the description given below of its preferred and non-limiting embodiments, wherein:

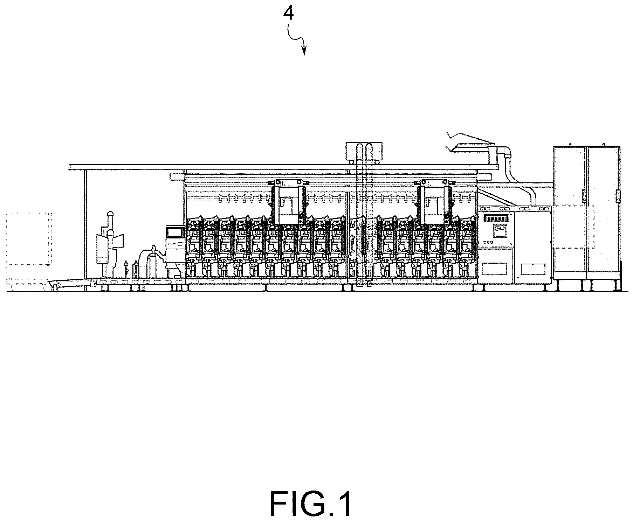

figure 1 shows a perspective view of a winding machine according to one embodiment of the present invention;

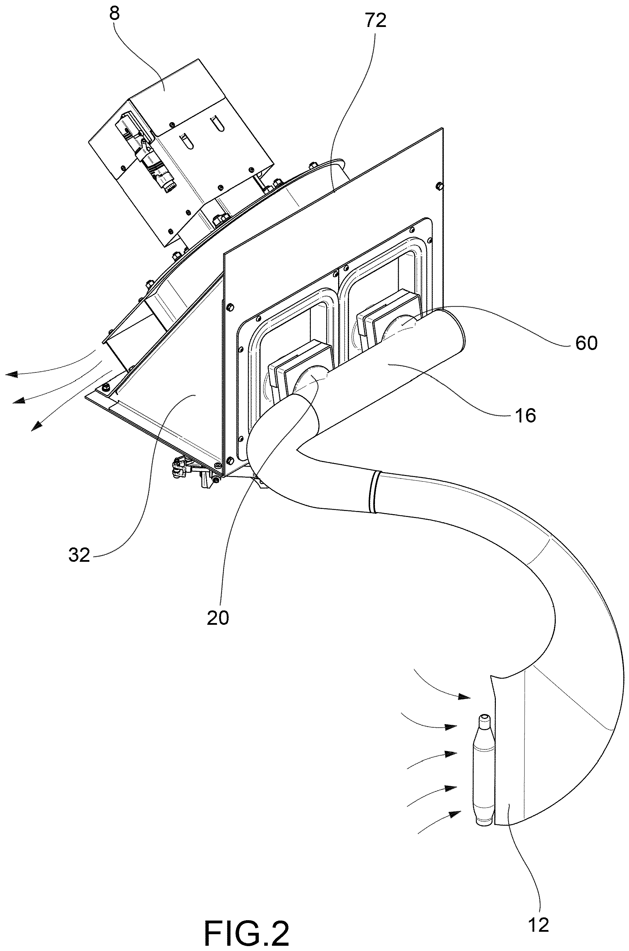

figure 2 shows a perspective view of a winding machine waste suction system according to the present invention;

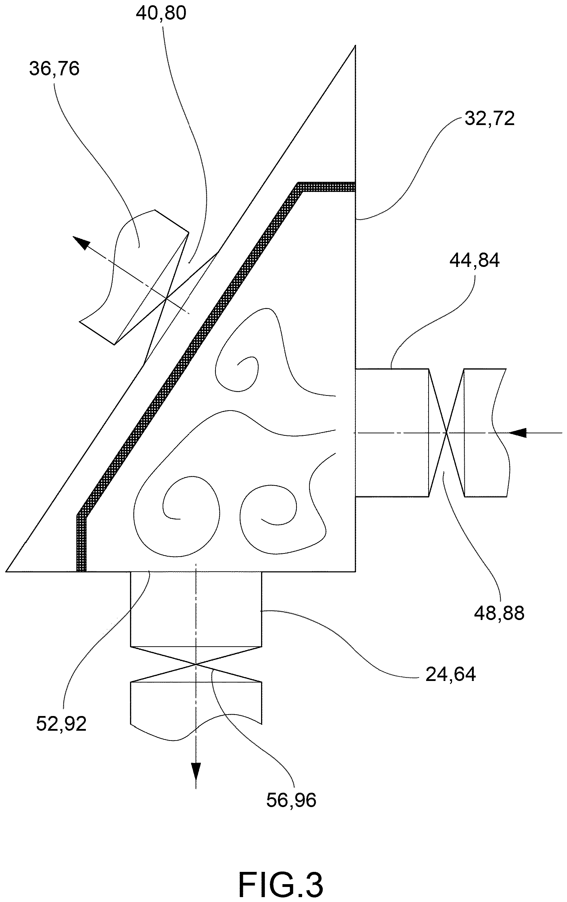

figure 3 is a partial cross-section view of the waste suction system in figure 2;

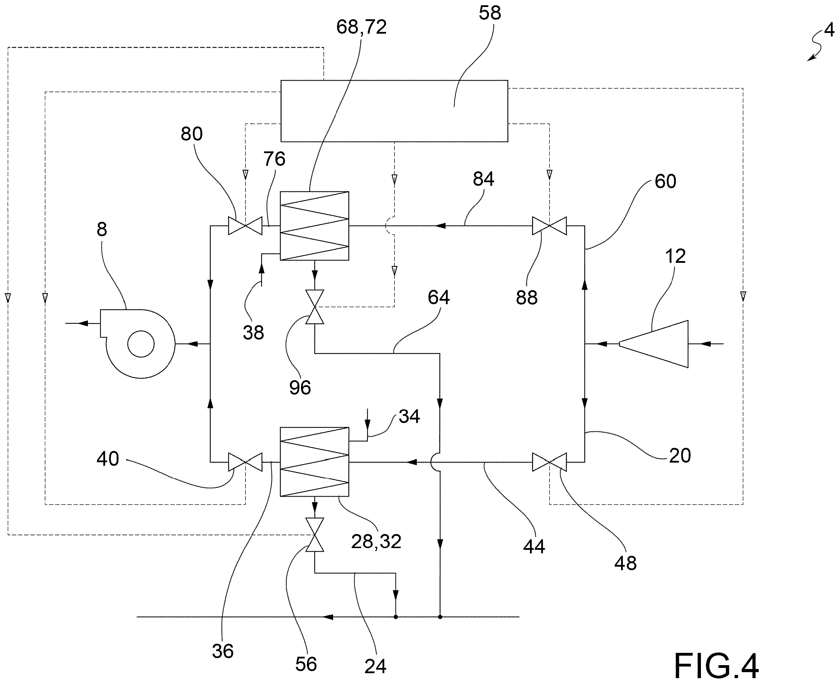

figure 4 shows an operating diagram of the winding machine waste suction system in figure 2.

The elements or parts of elements common to the embodiments described below will be indicated using the same reference numerals.

### DETAILED DESCRIPTION

With reference to the aforementioned figures, reference numeral 4 globally denotes a winding machine.

As mentioned above, the present invention relates to a winding machine provided with an improved suction and waste collection system and a control method thereof. By way of a non-limiting example, the invention refers to a yarn suction and collection system serving a bobbin preparer, a preliminary station for processing bobbins of yarn coming directly from the spinning machine or from an independent loading system (bulk).

The present invention is therefore intended to be applicable to a generic strand suction and collection system serving a winding machine.

In addition, it should be noted that the term thread or single thread or continuous thread refers to a single filament or continuous filament (for example in the case of silk, artificial or synthetic fibres), while the term yarn refers to a group of fibrils of varying lengths that are paralleled and joined together by twisting. Hereinafter, one or the other term will be used indifferently, it being understood that the applications of the present invention are not limited to one or the other type.

The winding machine 4 comprises a vacuum generating device 8 for generating an air stream containing winding waste, such as strands or dust.

The vacuum generating device 8 is, for example, a centrifugal fan, which may be driven via inverter by a brushless or asynchronous three-phase electric motor.

The winding machine 4 further comprises a suction nozzle 12 for said winding waste, connected by a dedicated pipe to a sleeve 16 having at least a first outlet 20.

Furthermore, the winding machine 4 comprises a first evacuation duct 24 of said winding waste, and a first filtering device 28 having a first waste collection box 32.

According to a possible embodiment, the surface of the first filtering device is made of micro-perforated steel sheet.

The first filtering device 28 is connected to the vacuum generating device 8 by a first waste suction duct 36, which can be partialized by a first waste suction valve 40.

The first filtering device 28 is connected to the first outlet 20 of the sleeve 16 by means of a first waste feed duct 44, provided with a first waste feed valve 48.

Moreover, the aforesaid first filtering device 28 is provided with a first outlet mouth 52 connected to the first waste collection box 32 and to the first waste evacuation duct 24.

Preferably, it is possible to partialize said first outlet mouth 52 by means of a first waste evacuation valve 56.

Preferably, the winding machine 4 comprises a control unit 58 operatively connected to said first waste suction valve 40, first waste feed valve 48 and first waste evacuation valve 56, so as to control the operation thereof, as described in more detail below.

Preferably, the winding machine 4 is provided with at least a first utility 34 fluidically connected to said first filtering device 28.

According to a possible embodiment, at least one of said first waste suction valve 40, first waste feed valve 48 and first waste evacuation valves 56 is a pneumatically operated regulating shutter.

According to the invention, at least one of said first waste suction valve 40, first waste feed valve 48 and first waste evacuation valves 56 is provided with dedicated cutting means (not shown) for performing yarn cutting to prevent unwanted yarn entanglement/accumulation.

According to a possible embodiment, the sleeve 16 is provided with a second outlet 60, distinct from the first outlet 20.

According to a possible embodiment, the winding machine 4 comprises a second filtering device 68 having a second waste collection box 72 connected to the vacuum generating device 8 by means of a second waste suction duct 76, which can be partialized by means of a second waste suction valve 80.

For example, the surface of the second filtering device 68 is composed of micro-perforated steel sheet.

The second filtering device 68 is connected to the second outlet 60 of the sleeve 16 by means of a second waste feed duct 84, provided with a second waste feed valve 88.

The aforesaid second filtering device 68 is provided with a second outlet mouth 92 connected to said second waste collection box 72 and to a second waste evacuation duct 64.

It is possible to partialize said second outlet mouth 92 by means of a second waste evacuation valve 96.

Said control unit 58 is operatively connected to said second waste suction valve 80, second waste feed valve 88 and second evacuation valve 96, so as to control the operation thereof, as described in more detail below.

According to a possible embodiment, the winding machine 4 is provided with at least one second utility 38 fluidically connected to said second filtering device 68.

According to a possible embodiment, at least one of said second waste suction valve 80, second waste feed valve 88 and second waste evacuation valves 96 is a pneumatically operated regulating shutter.

According to a possible embodiment, at least one out of said second waste suction valve 80, second waste feed valve 88 and second waste evacuation valves 96 is provided with dedicated cutting means (not shown) for performing yarn cutting to prevent unwanted yarn tangles/accumulation..

The functioning i.e. the control method, of a winding machine with an improved waste suction and collection system according to the present invention will now be described.

In particular, under normal suction conditions, the suction system of the winding machine 4 aspirates and collects the strands in one of said first 32 and second waste collection boxes 72, while the other waste collection box 72,32) is momentarily non-operational.

For this condition to be realized the first waste feed valve 48 must be opened to serve the suction nozzle 12 and collect said waste.

In addition, the first waste suction valve 40 must be opened to serve the suction nozzle 12 and/or at least a first utility 34 fluidically connected to said first filtering device 28; lastly the first waste evacuation valve 56 must be closed.

In addition, the second waste feed valve 88 must be closed so as not to disturb the flow of waste flowing into the first waste collection box 32, the second waste suction valve 80 must then be opened, to continue to serve a second utility 38 fluidically connected to said second filtering device 68, and lastly the second waste evacuation valve 96 must be closed.

When the first waste collection box 32 reaches the maximum programmed filling level, it must first be made hermetic by carrying out the following operating steps in sequence.

In particular, the first waste suction valve 40 is closed, the first waste feed valve 48 is closed, and the first waste evacuation valve 56 is opened and the evacuation of the waste is then carried out.

The first waste evacuation valve 56 is then closed and lastly the first waste suction valve 40 is reopened to serve a first utility 34 fluidically connected to said first filtering device 28.

At the same time, the waste must be conveyed to the second waste collection box 72 to give continuity of service to the suction nozzle 12.

For this purpose, the second waste feed valve 88 is opened, the second waste suction valve 80 is kept open, in order to continue serving a second utility 38 fluidically connected to said second filtering device 68, and lastly the second waste evacuation valve 96 is closed.

At this point, the first waste collection box 32, which was operational, becomes non-operational, and vice versa.

As may be appreciated from the description, the present invention makes it possible to overcome the drawbacks of the prior art.

In particular, the present invention makes it possible to obtain continuity of the suction service of the yarn end search nozzle, which is always guaranteed for the bobbins, regardless of the unloading step of the strands.

This increases the productivity of the yarn end search station and thus of the entire machine.

Moreover, in the case of centralized unloading, it is possible to unload the collected strands more frequently, with a consequent reduction of the depression needed to evacuate them from the box, of the speed necessary to transport them towards the centralized filter, therefore of the installed power, of the overall energy consumption of the machine and of the noise produced by the depression generating devices.

In addition, greater service reliability is achieved in the event of one of the two collection boxes becoming inoperative, e.g. due to the failure of one or more of the economisers.

Finally, there is a reduction in the stress on the vacuum device associated with the stopping and starting phases.

A person skilled in the art may make numerous modifications and variations to the solutions described above so as to satisfy contingent and specific requirements.

The scope of protection of the present invention is defined by the following claims.

## Claims

1. Winding machine (4) comprising:
- a vacuum generating device (8) for generating an air stream containing winding waste, such as strands or dust,
- a suction nozzle (12) for said winding waste, connected to a sleeve (16) having at least a first outlet (20),
- a first evacuation duct (24) of said winding waste,
- a first filtering device (28) having a first waste collection box (32) and being connected to the vacuum generating device (8) by a first waste suction duct (36), which can be partialized by a first waste suction valve (40),
- the first filtering device (28) being connected to the first outlet (20) of the sleeve (16) by means of a first waste feed duct (44), provided with a first waste feed valve (48),
- said first filtering device (28) being provided with a first outlet mouth (52) connected to the first waste collection box (32) and to the first waste evacuation duct (24), it being possible to partialize said first outlet mouth (52) by means of a first waste evacuation valve (56),
- wherein the sleeve (16) of the suction nozzle (12) is provided with a second outlet (60), distinct from the first outlet (20), and wherein the winding machine (4) includes a second filtering device (68) having a second waste collection box (72) connected to the vacuum generating device (8) by means of a second waste suction duct (76), which can be partialized by means of a second waste suction valve (80),
- the second filtering device (68) being connected to the second outlet (60) of the sleeve (16) by means of a second waste feed duct (84), provided with a second waste feed valve (88),
- the aforesaid second filtering device (68) being provided with a second outlet mouth (92) connected to said second waste collection box (72) and to a second waste evacuation duct (64), it being possible to partialize the second outlet mouth (92) by means of a second waste evacuation valve (96),
**characterized in that**
at least one of said first waste suction valve (40), first waste feed valve (48) and first waste evacuation valves (56) is provided with dedicated cutting means for performing yarn cutting to prevent unwanted yarn tangles/accumulation.

2. The winding machine (4) according to claim 1, wherein the winding machine (4) comprises a control unit (58) operatively connected to said first waste suction valve (40), first waste feed valve (48) and first waste evacuation valve (56), so as to control the operation thereof.

3. The winding machine (4) according to claim 2, wherein said control unit (58) is operatively connected to said second waste suction valve (80), said second waste feed valve (88) and said second waste evacuation valve (92), so as to control the operation thereof.

4. The winding machine (4) according to claim 1 or 2, wherein the winding machine (4) is provided with at least a first utility (34) fluidically connected to said first filtering device (28) and/or at least one second utility (38) fluidically connected to said second filtering device (68) .

5. The winding machine (4) according to any of the claims from 1 to 4, wherein at least one of said first waste suction valve (40), first waste feed valve (48) and first waste evacuation valves (56) is a pneumatically operated regulating shutter.

6. The winding machine (4) according to any of the claims from 1 to 5, wherein at least one of said second waste suction valve (80), second waste feed valve (88) and second waste evacuation valves (96) is a pneumatically operated regulating shutter.

7. The winding machine (4) according to any of the claims from 1 to 6, wherein at least one out of said second waste suction valve (80), second waste feed valve (88) and second waste evacuation valves (92) is provided with dedicated cutting means for performing yarn cutting to prevent unwanted yarn tangles/accumulation.

8. The winding machine (4) according to any of the claims from 1 to 7, wherein the surface of the first filtering device (28) comprises micro-perforated steel sheet.

9. The winding machine (4) according to any of the claims from 1 to 8, wherein the surface of the second filtering device (68) comprises micro-perforated steel sheet.

10. The winding machine (4) according to any of the claims from 1 to 9, wherein the vacuum generating device (8) is a centrifugal fan, driven via inverter by a brushless or asynchronous three-phase electric motor.

11. Control method of a winding machine (4) comprising the steps of:
- providing a winding machine (4) according to any of the claims from 1 to 10,
- under normal suction conditions, aspirating and collecting the waste in one of the said first and second waste collection boxes (32,72), the other box (72,32) being momentarily non-operational.

12. The control method of a winding machine (4) according to claim 11, comprising the steps of:
- opening the first waste feed valve (48) to serve the suction nozzle and collect said waste,
- opening the first waste suction valve (40), to serve the suction nozzle (12) and/or at least a first utility (34) fluidically connected to said first filtering device (28),
- closing the first waste evacuation valve (56).

13. The control method of a winding machine (4) according to claim 12, comprising the steps of:
- closing the second waste feed valve (88) so as not to disturb the flow of waste flowing into the first waste collection box (32),
- opening the second waste suction valve (80), to continue to serve a second utility (38) fluidically connected to said second filtering device (68),
- closing the second waste evacuation valve (96).

14. The control method of a winding machine (4) according to claim 11, 12 or 13, wherein, when the first waste collection box (32) reaches the maximum programmed filling level, the steps of:
- closing the first waste suction valve (40),
- closing the first waste feed valve (48),
- opening the first waste evacuation valve (56) and evacuating the waste,
- closing the first waste evacuation valve (56),
- reopening the first waste suction valve (40) to serve a first utility (34) fluidically connected to said first filtering device (28) are performed.

15. The control method of a winding machine (4) according to claim 12, 13 or 14, comprising the steps of:
- opening the second waste feed valve (88),
- keeping the second waste suction valve (80) open,
- closing the second waste evacuation valve (96).

## Patentansprüche

1. Wickelmaschine (4), umfassend:
- eine Vakuumerzeugungsvorrichtung (8) zum Erzeugen eines Luftstroms, der Wickelabfälle wie Stränge oder Staub enthält,
- eine Saugdüse (12) für die Wickelabfälle, die mit einer Hülse (16) verbunden ist, die zumindest einen ersten Auslass (20) aufweist,
- einen ersten Evakuierungs- bzw. Entleerungskanal (24) für die Wickelabfälle,
- eine erste Filtervorrichtung (28), die einen ersten Abfallsammelbehälter (32) aufweist und mit der Vakuumerzeugungsvorrichtung (8) durch einen ersten Abfallabsaugkanal (36) verbunden ist, der durch ein erstes Abfallabsaugventil (40) geteilt werden kann,
- wobei die erste Filtervorrichtung (28) mit dem ersten Auslass (20) der Hülse (16) mittels eines ersten Abfallzufuhrkanals (44) verbunden ist, der mit einem ersten Abfallzufuhrventil (48) versehen ist,
- wobei die erste Filtervorrichtung (28) mit einer ersten Auslassöffnung (52) versehen ist, die mit dem ersten Abfallsammelbehälter (32) und dem ersten Abfallentleerungskanal (24) verbunden ist, wobei es möglich ist, die erste Auslassöffnung (52) mittels eines ersten Abfallevakuierungs- bzw. -entleerungsventils (56) zu teilen,
- wobei die Hülse (16) der Saugdüse (12) mit einem zweiten Auslass (60) versehen ist, der sich von dem ersten Auslass (20) unterscheidet, und wobei die Wickelmaschine (4) eine zweite Filtervorrichtung (68) mit einem zweiten Abfallsammelbehälter (72) umfasst, der mit der Vakuumerzeugungsvorrichtung (8) mittels eines zweiten Abfallabsaugkanals (76) verbunden ist, der mittels eines zweiten Abfallabsaugventils (80) geteilt werden kann,
- wobei die zweite Filtervorrichtung (68) mit dem zweiten Auslass (60) der Hülse (16) mittels eines zweiten Abfallzufuhrkanals (84) verbunden ist, der mit einem zweiten Abfallzufuhrventil (88) versehen ist,
- wobei die vorgenannte zweite Filtervorrichtung (68) mit einer zweiten Auslassöffnung (92) versehen ist, die mit dem zweiten Abfallsammelbehälter (72) und mit einem zweiten Abfallevakuierungs- bzw. -entleerungskanal (64) verbunden ist, wobei es möglich ist, die zweite Auslassöffnung (92) mittels eines zweiten Abfallevakuierungs- bzw. -entleerungsventils (96) zu teilen,
**dadurch gekennzeichnet, dass** zumindest eines des ersten Abfallabsaugventils (40), des ersten Abfallzufuhrventils (48) und der ersten Abfallentleerungsventile (56) mit dedizierten Schneidmitteln zum Durchführen eines Garnschneidens versehen ist, um unerwünschte Garnverwicklungen/-ansammlungen zu verhindern.

2. Wickelmaschine (4) nach Anspruch 1, wobei die Wickelmaschine (4) eine Steuerungs- bzw. Regelungseinheit (58) umfasst, die operativ mit dem ersten Abfallabsaugventil (40), dem ersten Abfallzufuhrventil (48) und dem ersten Abfallentleerungsventil (56) verbunden ist, um deren Betrieb zu steuern bzw. zu regeln.

3. Wickelmaschine (4) nach Anspruch 2, wobei die Steuerungs- bzw. Regelungseinheit (58) operativ mit dem zweiten Abfallabsaugventil (80), dem zweiten Abfallzufuhrventil (88) und dem zweiten Abfallentleerungsventil (92) verbunden ist, um deren Betrieb zu steuern bzw. zu regeln.

4. Wickelmaschine (4) nach Anspruch 1 oder 2, wobei die Wickelmaschine (4) mit zumindest einem ersten Versorger (34), der fluidisch mit der ersten Filtervorrichtung (28) verbunden ist, und/oder zumindest einem zweiten Versorger (38) versehen ist, der fluidisch mit der zweiten Filtervorrichtung (68) verbunden ist.

5. Wickelmaschine (4) nach einem der Ansprüche 1 bis 4, wobei zumindest eines des ersten Abfallabsaugventils (40), des ersten Abfallzufuhrventils (48) und der ersten Abfallentleerungsventile (56) ein pneumatisch betriebener Regel- bzw. Regulierverschluss ist.

6. Wickelmaschine (4) nach einem der Ansprüche 1 bis 5, wobei zumindest eines des zweiten Abfallabsaugventils (80), des zweiten Abfallzufuhrventils (88) und der zweiten Abfallentleerungsventile (96) ein pneumatisch betriebener Regel- bzw. Regulierverschluss ist.

7. Wickelmaschine (4) nach einem der Ansprüche 1 bis 6, wobei zumindest eines des zweiten Abfallabsaugventils (80), des zweiten Abfallzufuhrventils (88) und der zweiten Abfallentleerungsventile (92) mit dedizierten Schneidmitteln zum Durchführen eines Garnschneidens versehen ist, um unerwünschte Garnverwicklungen/-ansammlungen zu verhindern.

8. Wickelmaschine (4) nach einem der Ansprüche 1 bis 7, wobei die Fläche bzw. Oberfläche der ersten Filtervorrichtung (28) mikroperforiertes Stahlblech umfasst.

9. Wickelmaschine (4) nach einem der Ansprüche 1 bis 8, wobei die Fläche bzw. Oberfläche der zweiten Filtervorrichtung (68) mikroperforiertes Stahlblech umfasst.

10. Wickelmaschine (4) nach einem der Ansprüche 1 bis 9, wobei die Vakuumerzeugungsvorrichtung (8) ein Zentrifugalgebläse ist, das über einen Wechselrichter durch einen bürstenlosen oder asynchronen dreiphasigen Elektromotor angetrieben wird.

11. Steuerungs- bzw. Regelungsverfahren für eine Wickelmaschine (4), umfassend die Schritte:
- Bereitstellen einer Wickelmaschine (4) nach einem der Ansprüche 1 bis 10,
- unter normalen Saugbedingungen, An- bzw. Absaugen und Sammeln des Abfalls in einem des ersten und des zweiten Abfallsammelbehälters (32, 72), wobei der andere Behälter (72, 32) momentan nicht in Betrieb ist.

12. Steuerungs- bzw. Regelungsverfahren für eine Wickelmaschine (4) nach Anspruch 11, umfassend die Schritte:
- Öffnen des ersten Abfallzufuhrventils (48), um die Saugdüse zu bedienen und den Abfall zu sammeln,
- Öffnen des ersten Abfallabsaugventils (40), um die Saugdüse (12) und/oder zumindest einen ersten Versorger (34) zu bedienen, der fluidisch mit der ersten Filtervorrichtung (28) verbunden ist,
- Schließen des ersten Abfallentleerungsventils (56).

13. Steuerungs- bzw. Regelungsverfahren für eine Wickelmaschine (4) nach Anspruch 12, umfassend die Schritte:
- Schließen des zweiten Abfallzufuhrventils (88), um den Fluss des Abfalls, der in den ersten Abfallsammelbehälter (32) fließt, nicht zu stören,
- Öffnen des zweiten Abfallabsaugventils (80), um weiterhin einen zweiten Versorger (38) zu bedienen, der fluidisch mit der zweiten Filtervorrichtung (68) verbunden ist,
- Schließen des zweiten Abfallentleerungsventils (96).

14. Steuerungs- bzw. Regelungsverfahren für eine Wickelmaschine (4) nach Anspruch 11, 12 oder 13, wobei, wenn der erste Abfallsammelbehälter (32) den maximal programmierten Füllstand erreicht, die Schritte ausgeführt werden:
- Schließen des ersten Abfallabsaugventils (40),
- Schließen des ersten Abfallzufuhrventils (48),
- Öffnen des ersten Abfallentleerungsventils (56) und Evakuieren bzw. Entleeren des Abfalls,
- Schließen des ersten Abfallentleerungsventils (56),
- Wiederöffnen des ersten Abfallabsaugventils (40) zum Bedienen eines ersten Versorgers (34), der fluidisch mit der ersten Filtervorrichtung (28) verbunden ist.

15. Steuerungs- bzw. Regelungsverfahren für eine Wickelmaschine (4) nach Anspruch 12, 13 oder 14, umfassend die Schritte:
- Öffnen des zweiten Abfallzufuhrventils (88),
- Offenhalten des zweiten Abfallabsaugventils (80),
- Schließen des zweiten Abfallentleerungsventils (96).

## Revendications

1. Machine d'enroulement (4) comprenant :
- un dispositif générateur de vide (8) pour engendrer un flux d'air contenant des déchets d'enroulement tels que des mèches ou de la poussière,
- une bouche d'aspiration (12) pour lesdits déchets d'enroulement, reliée à un manchon (16) ayant au moins une première sortie (20),
- un premier conduit d'évacuation (24) desdits déchets d'enroulement,
- un premier dispositif de filtration (28) ayant une première boîte de collecte de déchets (32) et étant relié au dispositif générateur de vide (8) par un premier conduit d'aspiration de déchets (36) qui peut être sectorisé par une première vanne d'aspiration de déchets (40),
- le premier dispositif de filtration (28) étant relié à la première sortie (20) du manchon (16) par un premier conduit d'approvisionnement de déchets (44) pourvu d'une première vanne d'approvisionnement de déchets (48),
- ledit premier dispositif de filtration (28) étant pourvu d'une première bouche de sortie (52) reliée à la première boîte de collecte de déchets (32) et au premier conduit d'évacuation de déchets (24), étant alors possible de sectoriser ladite bouche de sortie (52) moyennant une première vanne d'évacuation de déchets (56),
- dans laquelle le manchon (16) de la bouche d'aspiration (12) est pourvu d'une deuxième sortie (60) différente de la première sortie (20) et dans laquelle la machine d'enroulement (4) comprend un deuxième dispositif de filtration (68) ayant une deuxième boîte de collecte de déchets (72) reliée au dispositif générateur de vide (8) moyennant un deuxième conduit d'aspiration de déchets (76) qui peut être sectorisé moyennant une deuxième vanne d'aspiration de déchets (80),
- le deuxième dispositif de filtration (68) étant relié à la deuxième sortie (60) du manchon (16) moyennant un deuxième conduit d'approvisionnement de déchets (84) pourvu d'une deuxième vanne d'approvisionnement de déchets (88),
- le deuxième dispositif de filtration (68) mentionné ci-avant étant pourvu d'une deuxième bouche de sortie (92) reliée à ladite deuxième boîte de collecte de déchets (72) et à un deuxième conduit d'évacuation de déchets (64), étant alors possible de sectoriser la deuxième bouche de sortie (92) moyennant une deuxième vanne d'évacuation de déchets (96),
**caractérisée en ce**
**qu'**au moins une parmi lesdites première vanne d'aspiration de déchets (40), première vanne d'approvisionnement de déchets (48) et première vanne d'évacuation de déchets (56) est pourvue de moyens appropriés de coupe pour effectuer une coupe de fil afin d'éviter une accumulation ou un noeud non désiré de fil.

2. Machine d'enroulement (4) selon la revendication 1, dans laquelle la machine d'enroulement (4) comprend une unité de commande (58) reliée opérationnellement auxdites première vanne d'aspiration de déchets (40), première vanne d'approvisionnement de déchets (48) et première vanne d'évacuation de déchets (56) afin de commander le fonctionnement de celles-ci.

3. Machine d'enroulement (4) selon la revendication 2, dans laquelle ladite unité de commande (58) est opérationnellement reliée à ladite deuxième vanne d'aspiration de déchets (80), ladite deuxième vanne d'approvisionnement de déchets (88) et ladite deuxième vanne d'évacuation de déchets (92), afin de commander leur fonctionnement.

4. Machine d'enroulement (4) selon la revendication 1 ou 2, dans laquelle la machine d'enroulement (4) est pourvue d'au moins une première fonctionnalité (34) fluidiquement reliée audit premier dispositif de filtration (28) et/ou à au moins une deuxième fonctionnalité (38) fluidiquement reliée audit deuxième dispositif de filtration (68).

5. Machine d'enroulement (4) selon l'une des revendications 1 à 4, dans laquelle au moins une parmi lesdites première vanne d'aspiration de déchets (40), première vanne d'approvisionnement de déchets (48) et première vanne d'évacuation de déchets (56) est un clapet de régulation pneumatiquement commandé.

6. Machine d'enroulement (4) selon l'une des revendications 1 à 5, dans laquelle au moins une parmi lesdites deuxième vanne d'aspiration de déchets (80), deuxième vanne d'approvisionnement de déchets (88) et deuxième vanne d'évacuation de déchets (96) est un clapet pneumatiquement commandé.

7. Machine d'enroulement (4) selon l'une des revendications 1 à 6, dans laquelle au moins une parmi lesdites deuxième vanne d'aspiration de déchets (80), deuxième vanne d'approvisionnement de déchets (88) et deuxième vanne d'évacuation de déchets (92) est pourvu de moyens de coupe spécifiques pour effectuer moyens appropriés de coupure pour effectuer une coupe de fil afin d'éviter une accumulation ou un noeud non désiré de fil.

8. Machine d'enroulement (4) selon l'une des revendications 1 à 7, dans laquelle la surface du premier dispositif de filtration (28) comprend une feuille d'acier micro-perforée.

9. Machine d'enroulement (4) selon l'une des revendications 1 à 8, dans laquelle la surface du deuxième dispositif de filtration (68) comprend une feuille d'acier micro-perforée.

10. Machine d'enroulement (4) selon l'une des revendications 1 à 9, dans laquelle le dispositif générateur de vide (8) est un ventilateur centrifuge entraîné, par le biais d'un inverseur, par un moteur électrique triphasé sans balais ou asynchrone.

11. Procédé de commande d'une machine d'enroulement (4) comprenant les étapes de :
- pourvoir une machine d'enroulement (4) selon l'une des revendications 1 à 10,
- sous des conditions normales d'aspiration, aspirer et collecter les déchets dans une desdites première et deuxième boîtes de collecte de déchets (32, 72), l'autre boîte (72, 32) n'étant momentanément pas opérationnel.

12. Procédé de commande d'une machine d'enroulement (4) selon la revendication 11, comprenant les étapes de :
- ouvrir la première vanne d'approvisionnement de déchets (48) pour commander la bouche d'aspiration et collecter lesdits déchets,
- ouvrir la première vanne d'aspiration de déchets (40) pour commander la bouche d'aspiration (12) et/ou au moins une première fonctionnalité (34) fluidiquement connectée audit premier dispositif de filtration (28),
- fermer la première vanne d'évacuation de déchets (56).

13. Procédé de commande d'une machine d'enroulement (4) selon la revendication 12, comprenant les étapes de :
- fermer la deuxième vanne d'approvisionnement de déchets (88) afin de ne pas déranger le flux de déchets coulant dans la première boîte de collecte (32),
- ouvrir la deuxième vanne d'aspiration de déchets (80) pour continuer à approvisionner une deuxième fonctionnalité fluidiquement reliée audit deuxième dispositif de filtration (68),
- fermer la deuxième vanne d'évacuation de déchets (96).

14. Procédé de commande d'une machine d'enroulement (4) selon la revendication 11, 12 ou 13, dans laquelle, lorsque la première boîte de collecte de déchets (32) arrive au niveau de remplissage programmé, les étapes de :
- fermer la première vanne d'aspiration de déchets (40),
- fermer la première vanne d'approvisionnement de déchets (48),
- ouvrir la première vanne d'évacuation de déchets (56) et évacuer les déchets,
- fermer la première vanne d'évacuation de déchets (56),
- rouvrir la première vanne d'aspiration de déchets (40) pour commander une première fonctionnalité (34) fluidiquement reliée audit premier dispositif de filtration (28)
sont effectuées.

15. Procédé de commande d'une machine d'enroulement (4) selon la revendication 12, 13 ou 14,
comprenant les étapes de :
- ouvrir la deuxième vanne d'approvisionnement de déchets (88),
- garder la deuxième vanne d'aspiration de déchets (80 ouverte,
- fermer la deuxième vanne d'évacuation de déchets (96).
